Europäisches Patentamt

European Patent Office

Office européen des brevets

(19)

(11) EP 0 483 022 B1

(12) **FASCICULE DE BREVET EUROPEEN**

(45) Date de publication et mention
de la délivrance du brevet:
**17.12.1997 Bulletin 1997/51**

(51) Int Cl.⁶: **G06F 7/02**, G08C 15/06

(21) Numéro de dépôt: **91420347.6**

(22) Date de dépôt: **02.10.1991**

(54) **Dispositif de contrôle ou de protection à microprocesseur comportant un système d'acquisition de données analogiques**

Mikroprozessor Steuer- oder Schutzeinrichtung mit einem Analogdatenerfassungssystem

Microprocessor control or protection device having an analogue data acquisition system

(84) Etats contractants désignés:
**BE CH DE ES GB IT LI SE**

(30) Priorité: **23.10.1990 FR 9013217**

(43) Date de publication de la demande:
**29.04.1992 Bulletin 1992/18**

(73) Titulaire: **SCHNEIDER ELECTRIC SA
92100 Boulogne Billancourt (FR)**

(72) Inventeurs:
• **Chaboud, Gilbert
F-38050 Grenoble Cédex (FR)**
• **Kalenine, Yvan
F-38050 Grenoble Cédex (FR)**

(74) Mandataire: **Jouvray, Marie-Andrée et al
Schneider Electric SA,
Sce. Propriété Industrielle
38050 Grenoble Cédex 09 (FR)**

(56) Documents cités:
**EP-A- 0 443 977         DE-A- 3 149 926**

• **PATENT ABSTRACTS OF JAPAN vol. 8, no. 139
(E-253)(1576) 28 Juin 1984 & JP-A-59 047 895
( MITSUBISHI ) 17 Mars 1984**
• **IBM TECHNICAL DISCLOSURE BULLETIN. vol.
30, no. 5, Octobre 1987, NEW YORK US pages
234 - 235; 'USE OF RAM AS A DATA
COMPARATOR'**

# Description

L'invention concerne un dispositif de contrôle ou de protection comportant un microprocesseur, une mémoire vive, un convertisseur analogique-numérique, à l'entrée duquel sont appliqués des signaux analogiques et destiné à fournir au microprocesseur des échantillons numériques représentatifs des signaux analogiques d'entrée, et des moyens de comparaison de chaque échantillon numérique à un nombre prédéterminé de seuils prédéterminés.

Dans les systèmes classiques, la comparaison de chaque échantillon à un certain nombre de seuils est réalisée par le microprocesseur, selon une séquence de comparaison programmée en conséquence. Chaque échantillon fourni par le convertisseur analogique-numérique est lu par le microprocesseur, et éventuellement stocké dans la mémoire vive. Puis le microprocesseur recherche dans une zone appropriée de la mémoire les seuils auxquels l'échantillon doit être comparé et effectue successivement la comparaison de l'échantillon avec chacun de ces seuils. Le résultat de cette comparaison peut ensuite être mis en mémoire et être utilisé lors d'un traitement ultérieur. Dans les dispositifs de contrôle ou de protection, notamment dans les dispositifs intégrés de protection et de contrôle de cellules moyenne tension, chaque échantillon doit être comparé à un nombre important de seuils, qu'il s'agisse de seuils intrinsèques à l'acquisition proprement dite, comme les vérifications de non saturation des mesures des échantillons de grandeurs physiques, ou de seuils liés aux protections à assurer, comme la détection de maximum de courant, de tension, etc... Ces tests de seuil sont nombreux, systématiques et répétitifs, et le temps de traitement nécessaire à l'unité centrale du microprocesseur pour effectuer ces comparaisons est d'autant plus important que le nombre et la complexité des zone de seuils croît.

L'utilisation de mémoires RAM préprogrammée pour effectuer des comparaisons d'une donnée simultanément avec plusieurs seuils est divulguée dans la publication IBM Technical Disclosure Bulletin, Vol. 30, No. 5, Octobre 1987, pages 234-235.

L'invention a pour but un dispositif tel que défini dans la revendication 1 dans lequel les comparaisons sont effectuées très rapidement, lors de l'acquisition d'un échantillon, tout en évitant de faire intervenir l'unité centrale du microprocesseur, celle-ci, déchargée de ces tâches répétitives, restant libre pour effectuer d'autres tâches.

Ce but est atteint par le fait que lesdits moyens de comparaison sont constitués par une première zone, de comparaison, de la mémoire vive, la mémoire vive comportant un bus d'adresse connecté à la sortie du convertisseur analogique-numérique, de manière à ce qu'un nombre prédéterminé de bits de poids forts d'un échantillon constitue l'adresse d'un nombre prédéterminé d'emplacements mémoire de la zone de comparaison dans lesquels sont préalablement stockés, sous forme binaire, les résultats de la comparaison auxdits seuils des échantillons dont les bits de poids forts ont une valeur prédéterminée, lesdits résultats de la comparaison et l'échantillon correspondant étant mis en mémoire dans une seconde zone, de stockage, de la mémoire vive.

La mémoire vive, normalement associé au microprocesseur, sert donc de comparateur et permet la mise en mémoire simultanée, pour un traitement ultérieur par le microprocesseur, d'un échantillon et du résultat de la comparaison de cet échantillon à divers seuils prédéterminés. La comparaison d'un échantillon à ces seuils s'effectue donc automatiquement et rapidement lors de l'acquisition de l'échantillon, avant tout traitement des données par le microprocesseur. L'économie réalisée sur le temps de traitement du microprocesseur compense très largement l'accroissement de la capacité de mémoire nécessaire. Ceci permet d'éviter également l'utilisation de circuits spécifiques pour une comparaison purement matérielle beaucoup plus coûteuse.

D'autres modes de réalisation sont définis dans les revendications dépendantes.

Notamment, le dispositif peut comporter une première mémoire tampon dont l'entrée est connectée à la sortie du convertisseur analogique-numérique, une seconde mémoire tampon dont l'entrée est connectée à la sortie de la zone de comparaison de la mémoire vive, les sorties des première et seconde mémoires tampons étant connectées au bus de données du microprocesseur, lui-même connecté au bus de données de la mémoire vive, de manière à permettre la lecture et la mise en mémoire, dans la zone de stockage de la mémoire vive, des données, échantillons et résultats de la comparaison de cet échantillon auxdits seuils, contenus dans lesdites mémoires tampons.

La première mémoire tampon, accessible par partie, comporte, de préférence, des première et seconde parties, la lecture des données contenues dans les mémoires tampons s'effectuant en deux cycles successifs, un premier cycle consistant à lire le contenu de la première partie de la première mémoire tampon et un second cycle consistant à lire simultanément le contenu de la seconde partie de la première mémoire tampon et le contenu de la seconde mémoire tampon.

Le dispositif reçoit de préférence des données provenant de plusieurs voies. Ces données sont multiplexées avant d'être appliquées au convertisseur analogique-numérique et les seuils auxquels un échantillon doit être comparé pouvant être très différents selon le type de données fournies par une voie, par exemple les seuils ne sont pas les mêmes selon qu'il s'agit de signaux représentatifs du courant de phase, de la tension, du courant homopolaire, éventuellement de la température,..

Le dispositif peut aussi comporter des moyens de multiplexage dont la sortie est connectée à l'entrée du convertisseur analogique-numérique, et dont les entrées sont connectées à une pluralité de voies, des moyens de sélection de la voie dont les signaux analogiques doivent être convertis, une partie de la zone de comparaison de la mémoire vive étant affectée à chacune desdites voies, ou à un groupe prédéterminé de voies, le bus d'adresse de la mémoire vive étant connecté à la sortie desdits moyens de sélection de voie, de manière à sélectionner dans la mémoire vive ladite partie de la zone de comparaison correspondant à la voie à laquelle l'échantillon converti est associé.

Il est ainsi possible d'adapter indépendamment les seuils de comparaison aux différentes voies d'acquisition de données.

D'autres avantages et caractéristiques ressortiront plus clairement de l'exposé qui va suivre d'un mode de réalisation particulier de l'invention, donné à titre d'exemple non limitatif et représenté aux dessins annexés sur lesquels:

La figure 1 représente, sous forme de schéma-bloc simplifié, un dispositif selon l'invention.

La figure 2 représente un exemple d'une partie, associée à une voie, de la zone de comparaison de la mémoire vive du dispositif selon la figure 1.

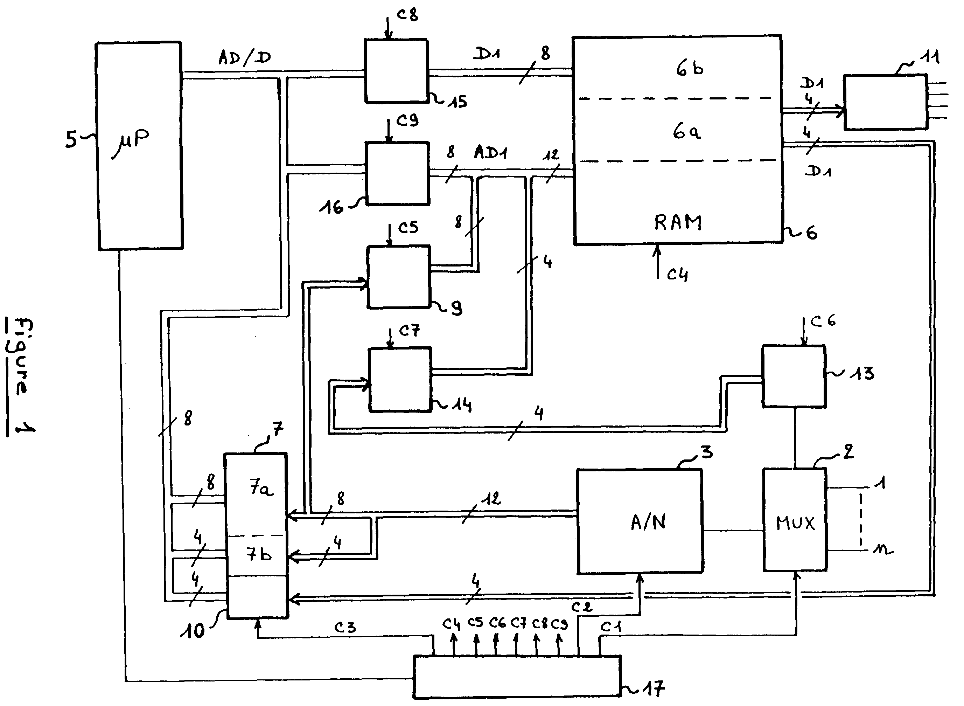

Dans le mode de réalisation particulier de l'invention représenté à la figure 1, des signaux analogiques, provenant de plusieurs voies, 1 à n, sont appliqués à l'entrée d'un multiplexeur 2. La sortie du multiplexeur est connectée à l'entrée d'un convertisseur analogique-numérique 3. Le dispositif comporte également un microprocesseur 5, associé à une mémoire vive standard (RAM) 6.

Sur la figure 1, le convertisseur 3 est un convertisseur 12 bits fournissant un échantillon de 12 bits sur son bus de sortie. Ce bus de sortie est connecté à l'entrée d'une première mémoire, ou registre, tampon 7 destinée à mettre en mémoire temporairement un échantillon à la fin de la conversion des signaux analogiques fournis au convertisseur par une voie prédéterminée. La sortie de la première mémoire tampon 7 est connectée au microprocesseur 5 par un bus d'adresse et de données AD/D, de 8 bits. L'acquisition d'un échantillon par le microprocesseur s'effectue en deux cycles successifs, un premier cycle pour la lecture de 8 bits mis en mémoire dans un première partie 7a de la première mémoire tampon 7, et un second cycle pour la lecture des 4 bits restants mis en mémoire dans une seconde partie 7b de la première mémoire tampon.

Une première zone 6a, organisée en zone de comparaison, de la mémoire vive est adressée par les 8 bits de poids forts d'un échantillon pendant le cycle de lecture par le microprocesseur des 8 bits mis en mémoire dans la première partie 7a de la première mémoire tampon 7. Le bus AD1 d'adresse de la mémoire vive 6 est, pour cela, connecté par l'intermédiaire d'une bascule de mémorisation 9 sur la figure 1, au bus de sortie du convertisseur 3.

La zone de comparaison 6a de la figure 1 comporte 256 octets, soit 8 emplacements mémoire (un octet) susceptibles d'être adressés par chacune des combinaisons possibles des 8 bits d'adresse.

Un bus de sortie de la zone de comparaison 6a est connecté à l'entrée d'une seconde mémoire, ou registre, tampon 10 dans laquelle sont tranférés 4 bits, par exemple les 4 bits de poids faibles, des emplacements mémoire adressés par l'échantillon considéré.

Ces 4 bits représentent le résultat, stocké au préalable dans la zone 6a, de la comparaison à quatre ensembles de seuils des échantillons dont les bits de poids forts sont associés à la même adresse de la zone 6a. Ce résultat de la comparaison associé à un échantillon, mis en mémoire dans la seconde mémoire tampon 10, est lu par le microprocesseur pendant le second cycle de lecture en même temps que les 4 bits de l'échantillon stockés dans la seconde partie 7b de la première mémoire tampon 7.

Dans le mode de réalisation préférentiel représenté sur la figure 1, chaque octet de la zone de comparaison 6a de la mémoire vive comporte 4 bits additionnels qui permettent de comparer les échantillons à d'autres seuils, ces 4 bits étant appliqués par l'intermédiaire d'un bus à l'entrée d'un circuit d'alarme et/ou de signalisation 11.

Un circuit 13 de sélection de voie contrôle le multiplexeur 2. Si les signaux appliqués aux différentes voies doivent être comparés à des seuils différents, ce qui est généralement le cas, la mémoire 6 comporte une partie de la zone de comparaison 6a associée à chacune des voies, ou éventuellement à un groupe de voies. A titre d'exemple, toutes les voies sur lesquelles sont mesurées des valeurs de courant peuvent correspondre à une même partie de la zone. Pour permettre de déterminer quelle partie de la zone 6a est associée à l'échantillon qui vient d'être converti, le numéro de la voie convertie est mis en mémoire dans une bascule de mémorisation 14 dont l'entrée est connectée au circuit de sélection de voie 13. La sortie de la bascule de mémorisation 14 est connectée au bus d'adresse AD1 de la mémoire vive 6 de manière à permettre l'adressage de la partie de la zone 6a associée à la voie concernée. Si le nombre n de voies est de 16, 4 bits sont nécessaires pour coder le numéro de voie, et l'adresse des emplacements de la mémoire vive 6 correspondant à un échantillon donné est constitué par les 4 bits du numéro de voie et les 8 bits de poids forts de l'échantillon.

Sur la figure 1, des circuits 15 et 16 permettent d'isoler le bus AD/D d'adresse et de données du microprocesseur respectivement des bus D1 de données et AD1 d'adresses de la mémoire vive 6.

Un circuit 17 de contrôle assure la synchronisation des divers éléments du circuit. Il est connecté au microprocesseur et fournit des signaux de commande C1 à C9 respectivement au multiplexeur 2, au convertisseur 3, aux mémoires tampons 7 et 10, à la mémoire vive 6, à la bascule de mémorisation 9, au circuit de sélection de voie 13, à la bascule de mémorisation 14, au circuit d'isolement 15 et au circuit 16.

Le dispositif selon la figure 1 fonctionne de la manière suivante:

Dans une première étape le convertisseur analogique-numérique convertit les signaux analogiques, présents sur la voie sélectionnée par le circuit de sélection 13, qui lui sont présentés par le multiplexeur 2.

La fin de conversion initialise une seconde étape consistant à mémoriser dans la première mémoire tampon 7 les 12 bits de l'échantillon converti, dans la bascule de mémorisation 9 les 8 bits de poids forts de cet échantillon, et dans la bascule de mémorisation 14 les 4 bits du numéro de voie correspondant.

Pendant une troisième étape correspondant à un premier cycle de lecture, le contenu de la première partie 7a, de la première mémoire tampon 7 est appliqué au bus d'adresses et de données AD/D du microprocesseur de manière à être lu. Simultanément, le contenu des bascules de mémorisation 9 et 14 est appliqué au bus d'adresse AD1 de la mémoire vive 6, les 4 bits de la bascule 14, représentatifs du numéro de voie considéré, permettant d'identifier la partie de la zone 6a de la mémoire correspondant à cette voie, et les 8bits de la bascule 9, représentatifs des bits de poids forts de l'échantillon considéré, identifiant à l'intérieur de cette partie de la zone les emplacements mémoire correspondants.Le résultat de la comparaison de l'échantillon à des seuils prédéterminés est mémorisé, sous la forme de 4 bits, dans la seconde mémoire tampon, 10. Le résultat de la comparaison à des seuils additionnels peut être appliqué à l'entrée du circuit 11 d'alarme et de signalisation. Il peut également éventuellement être utilisé pour effectuer une interruption matérielle du microprocesseur. Dans le cas d'un relais moyenne tension, celui-ci peut par exemple appeler une procédure particulière réclamant un traitement immédiat interrompant ainsi les tâches de fond lorsqu'un échantillon représentatif du courant dépasse une valeur critique prédéterminée.

Pendant les trois premières étapes, les circuits 15 et 16 isolent le bus d'adresse et de données AD/D du microprocesseur des bus D1 de données et AD1 d'adresses de la mémoire vive.

Dans une quatrième étape, les 8 bits de l'échantillon qui viennent d'être lus sont mis en mémoire dans une seconde zone 6b, de stockage, de la mémoire vive 6. Les données correspondantes sont transmises à la mémoire 6 par le bus d'adresses et de données AD/D du microprocesseur, le circuit 15, et le bus de données D1 de la mémoire, à une adresse qui lui est transmise par le bus AD/D, le circuit 16 et le bus d'adresses AD1 de la mémoire. Pendant cette étape les bascules 9 et 14 sont bloquées.

La cinquième étape est constituée par un second cycle de lecture. Les bus AD/D, D1 et AD1 sont de nouveau isolés par les circuits 15 et 16. Le contenu de la seconde partie 7b, de la première mémoire tampon 7 et le contenu de la seconde mémoire tampon 10 sont appliqués au bus AD/D de manière à être lus. A la fin de cette étape, la totalité de l'échantillon et le résultat de la comparaison à des seuils prédéterminés ont donc été lus, en deux cycles de lecture.

Dans une sixième et dernière étape, du même type que la quatrième, les 4 derniers bits de l'échantillon et les 4 bits du résultat de la comparaison à des seuils associés à l'échantillon, qui viennent d'être lus, sont mis en mémoire dans la seconde zone 6b, de stockage, de la mémoire vive 6.

Chaque échantillon est donc associé, dans la zone de stockage 6b de la mémoire vive, au résultat de sa comparaison à des seuils prédéterminés et le microprocesseur pourra utiliser ces données directement pour tout traitement ultérieur, sans avoir à effectuer des comparaisons répétitives sur chacun des échantillons à traiter.

A un moment approprié, soit à la fin de la seconde étape, soit pendant la troisième étape, le circuit 13 de sélection de voie modifiera le numéro de voie sélectionnée et appliquera au multiplexeur le nouveau numéro de voie à sélectionner. Dès que possible après la fin de la conversion d'un échantillon associé à une voie, le multiplexeur présentera ainsi au convertisseur les signaux analogiques présents sur la voie suivante à convertir, ce qui permet une stabilisation des signaux à l'entrée du convertisseur avant le début de la conversion suivante.

Bien que dans le mode de réalisation représenté, le microprocesseur intervient lors des cycles de lecture des données et lors de leur écriture dans la zone de stockage de la mémoire, il est possible de réduire encore le temps d'intervention du microprocesseur dans l'acquisition des données en utilisant, de manière connue, un canal d'accès directe mémoire (DMA).

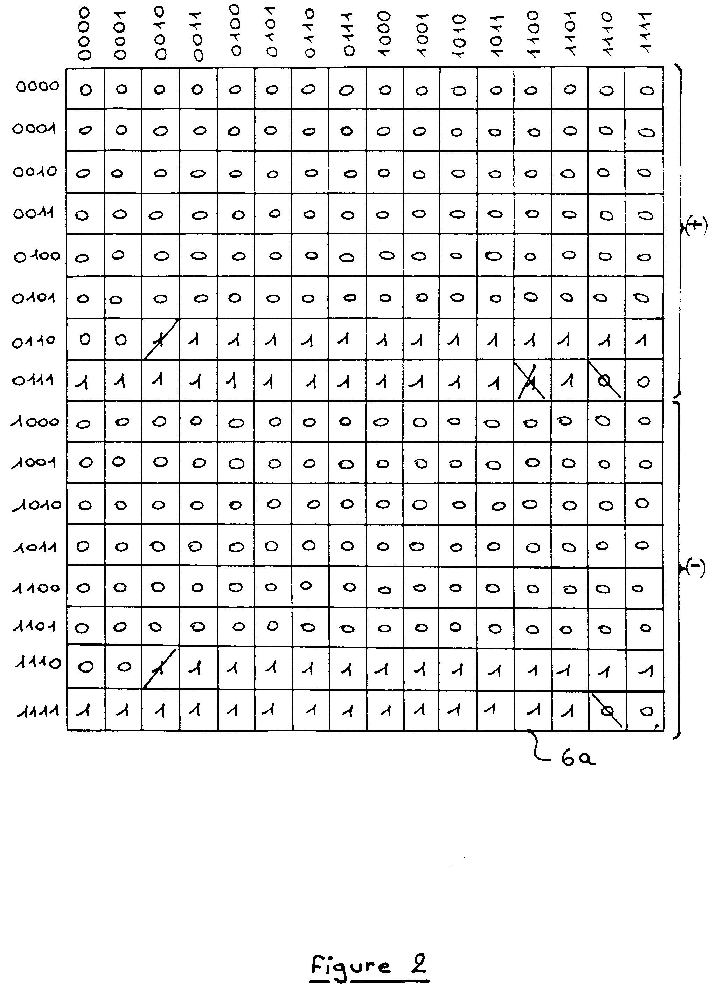

La figure 2 illustre plus en détail un exemple d'une partie, associée à une voie, de la zone de comparaison 6a de la mémoire vive. Sur la figure 2, seul un des emplacements mémoire associé à chacune des adresses de la partie de la zone de comparaison, associée à une voie, est représenté, avec un bit par adresse correspondant au résultat de la comparaison à un jeu prédéterminé de seuils d'échantillons dont les bits de poids forts correspondent à cette adresse.

Une partie de la zone 6a, adressée par 8 bits, comporte 256 octets, dont un bit seulement est représenté sur la figure 2.

Les 8 bits d'adresse sont décomposés en 2 fois 4 bits, les quatre bits de poids les plus forts adressant les 16 rangées horizontales, et les quatre bits restants adressant les 16 colonnes verticales. Le bit de poids le plus fort est un bit de signe, 0 correspondant au signe (+) et 1 au signe (-).

On a délimité sur la figure 2 une zone dans laquelle:

$$1572 \leq |E| < 2020,$$

E étant la valeur d'un échantillon et les chiffres étant représentés en binaire, soit:

| +1572 | 0110 | 0010 | 0000 |
|--------|------|------|------|
| -1572 | 1110 | 0010 | 0000 |
|  |  |  |  |
| +2020 | 0111 | 1110 | 0000 |
| -2020 | 1110 | 1110 | 0000 |

Le résultat de la comparaison entre la valeur absolue d'un échantillon E et les limites précitées est indiqué sur la figure par un 1 si cette valeur absolue est comprise à l'intérieur de ces limites, et par un zéro si cette valeur absolue se trouve à l'extérieur de ces limites.

A titre d'exemple le résultat obtenu avec un échantillon de valeur +1990 a été indiqué sur la figure 2. En binaire, on obtient:

| + 1990 | 0111 | 1100 | 0010 |
|--------|------|------|------|

Seuls les 8 bits de poids forts étant utilisés comme adresse, l'emplacement correspondant est indiqué par une croix sur la figure et l'on obtient,par simple adressage,le résultat, 1 dans la cas présent, de la comparaison de cet échantillon avec un jeu prédéterminé de seuils.

Il ressort clairement de cet exemple que chaque échantillon peut être comparé très rapidement aussi bien à un seuil donné, qu'à un jeu de seuils définissant une zone qui peut être complexe.

L'utilisation de plusieurs bits de mémoire parmi l'octet adressé permet de comparer tout aussi rapidement chaque échantillon à plusieurs jeux de seuils pouvant être très complexes.

A titre d'exemple, 8 jeux de comparaisons (1 octet par adresse) sur 16 voies d'acquisition analogiques permettent d'effectuer 128 comparaisons à des jeux de seuils indépendants. De plus, ces seuils sont modifiables à tout moment par simple modification du contenu de la zone correspondante 6a de la mémoire vive.

Le dispositif décrit ci-dessus a permis de réaliser un dispositif de contrôle et de protection d'un relais moyenne tension dans lequel le pourcentage de temps consacré par l'unité centrale du microprocesseur à l'acquisition des données est passé de 25% dans un dispositif classique à 3%, tout en conservant une même période d'échantillonnage.

La précision des comparaisons est fonction du nombre de bits de l'échantillon utilisés pour adresser la zone 6a de la mémoire vive. Dans le cas d'un échantillon à 12 bits, si tous les bits sont utilisés la précision est maximum, mais la capacité de mémoire nécessaire pour la comparaison correspond à 4K octets par voie. Si l'on diminue le nombre de bits de poids forts de l'échantillon utilisés pour l'adressage de la zone 6a, la capacité de mémoire nécessaire diminue mais la précision des comparaisons diminue également. Le mode de réalisation préférentiel décrit ci-dessus, avec 8 bits d'adressage, permet également d'obtenir un compromis satisfaisant entre la précision des comparaisons et la capacité de mémoire nécessaire (256 octets par voie).

## Revendications

1. Dispositif de contrôle ou de protection comportant un microprocesseur (5), une mémoire vive (6), un convertisseur analogique-numérique (3), à l'entrée duquel sont appliqués des signaux analogiques et destiné à fournir au microprocesseur des échantillons numériques représentatifs des signaux analogiques d'entrée, et des moyens de comparaison de chaque échantillon numérique à un nombre prédéterminé de seuils prédéterminés, dispositif caractérisé en ce que lesdits moyens de comparaison sont constitués par une première zone, de comparaison (6a), de la mémoire vive (6), la mémoire vive comportant un bus d'adresse (AD1) connecté à la sortie du convertisseur analogique-numérique (3), de manière à ce qu'un nombre prédéterminé (8) de bits de poids forts d'un échantillon constitue l'adresse d'un nombre prédéterminé (4) d'emplacements mémoire de la zone de comparaison (6a) dans lesquels sont préalablement stockés, sous forme binaire, les résultats de la comparaison auxdits seuils des échantillons dont les bits de poids forts ont une valeur prédéterminée, lesdits résultats de la comparaison et l'échantillon correspondant étant mis en mémoire dans une seconde zone, de stockage, (6b) de la mémoire vive.

2. Dispositif selon la revendication 1, caractérisé en ce qu'il comporte une première mémoire tampon (7) dont l'entrée est connectée à la sortie du convertisseur analogique-numérique (3), une seconde mémoire tampon (10) dont l'entrée est connectée à la sortie de la zone de comparaison (6a) de la mémoire vive, les sorties des première et seconde mémoires tampons (7,10) étant connectées au bus de données(AD/D)du microprocesseur, lui-même connecté au bus de données (D1) de la mémoire vive, de manière à permettre la lecture et la mise en mémoire, dans la zone de stockage (6b) de la mémoire vive, des données, échantillons et résultats de la comparaison de cet échantillon auxdits seuils, contenus dans lesdites mémoires tampons.

3. Dispositif selon la revendication 2, caractérisé en ce que la première mémoire tampon (7) comporte des première (7a) et seconde (7b) parties, la lecture des données contenues dans les mémoires tampons(7,10) s'effectuant en deux cycles successifs, un premier cycle consistant à lire le contenu de la première partie (7a) de la première mémoire tampon et un second cycle consistant à lire simultanément le contenu de la seconde partie (7b) de la première mémoire tampon et le contenu de la seconde mémoire tampon (10).

4. Dispositif selon l'une quelconque des revendications 1 à 3, caractérisé en ce que le convertisseur (3) est un convertisseur 12 bits, les 8 bits de poids forts d'un échantillon constituant l'adresse des emplacements de la zone de comparaison (6a) de la mémoire vive associés audit échantillon.

5. Dispositif selon l'une quelconque des revendications 1 à 4, caractérisé en ce que la zone de comparaison (6a) de la mémoire vive comporte quatre emplacements mémoire associés à chaque adresse.

6. Dispositif selon l'une quelconque des revendications 1 à 5, caractérisé en ce qu'il comporte des moyens (2) de multiplexage dont la sortie est connectée à l'entrée du convertisseur analogique-numérique (3), et dont les entrées sont connectées à une pluralité de voies (1-n), des moyens (13) de sélection de la voie dont les signaux analogiques doivent être convertis, une partie de la zone de comparaison (6a) de la mémoire vive étant affectée à chacune desdites voies, ou à un groupe prédéterminé de voies, le bus d'adresse (AD1) de la mémoire vive étant connecté à la sortie desdits moyens (13) de sélection de voie, de manière à sélectionner dans la mémoire vive ladite partie de la zone de comparaison (6a) correspondant à la voie à laquelle l'échantillon converti est associé.

7. Dispositif selon la revendication 6, caractérisé en ce qu'il comporte 16 voies, les moyens (13) de sélection de voies fournissant au bus d'adresse (AD1) de la mémoire vive quatre bits représentatifs de la voie associée à l'échantillon converti.

8. Dispositif selon l'une quelconque des revendications 1 à 7, caractérisé en ce que la zone de comparaison (6a) de la mémoire vive comporte un nombre prédéterminé (4) d'emplacements mémoire additionnels, associés à chaque adresse dans lesquels sont préalablement stockés, sous forme binaire, les résultats de la comparaison de seuils additionnels et des échantillons dont les bits de poids forts ont une valeur prédéterminée, le contenu desdits emplacements mémoire additionnels étant appliqué à l'entrée d'un circuit d'alarme et/ou de signalisation (11).

9. Dispositif selon la revendication 8, caractérisé en ce que ladite zone de comparaison (6a) de la mémoire vive comporte 4 emplacements mémoire additionnels associés à chaque adresse.

**Patentansprüche**

1. Steuer- oder Schutzschaltung mit einem Mikroprozessor (5), einem RAM (6), einem Analog-Digital-Wandler (3), dessen Eingang mit analogen Signalen beaufschlagt wird und der dazu dient, digitale Abtastwerte an den Mikroprozessor zu liefern, welche die analogen Eingangssignale abbilden, sowie Mitteln zum Vergleich jedes digitalen Abtastwerts mit einer festgelegten Anzahl bestimmter Schwellwerte, dadurch gekennzeichnet, daß die genannten Vergleichsmittel durch einen ersten Vergleichsbereich (6a) des RAM (6) gebildet werden, wobei der RAM einen, an den Ausgang des Analog-Digital-Wandlers (3) angeschlossenen Adreßbus (AD1) umfaßt, derart daß eine bestimmte Anzahl (8) höherwertiger Bits eines Abtastwerts die Adresse einer bestimmten Anzahl (4) von Speicherplätzen des Vergleichsbereichs (6a) bildet, in denen zunächst die Ergebnisse des Vergleichs zwischen den Abtastwerten, deren höherwertige Bits einen bestimmten Wert aufweisen, und den genannten Schwellwerten als Binärwerte abgespeichert werden, wobei die genannten Ergebnisse des Vergleichs und der zugehörige Abtastwert in einem zweiten Speicherbereich (6b) des RAM abgespeichert werden.

2. Schaltung nach Anspruch 1, dadurch gekennzeichnet, daß sie einen ersten Zwischenspeicher (7), dessen Eingang mit dem Ausgang des Analog-Digital-Wandlers (3) verbunden ist, sowie einen zweiten Zwischenspeicher (10), dessen Eingang mit dem Ausgang des Vergleichsbereichs (6a) des RAM verbunden ist, umfaßt, wobei die Ausgänge des ersten und des zweiten Zwischenspeichers (7, 10) an den Datenbus (AD/D) des Mikroprozessors angeschlossen sind, welcher seinerseits an den Datenbus des RAM (D1) des RAM angeschlossen ist, derart daß die Daten, die Abtastwerte und, die in den genannten Zwischenspeichern enthaltenen Ergebnisse des Vergleichs zwischen diesem Abtastwert und den genannten Schwellwerten gelesen und im Speicherbereich (6b) des RAM abgespeichert werden können.

3. Schaltung nach Anspruch 2, dadurch gekennzeichnet, daß der erste Zwischenspeicher (7) einen ersten (7a) und einen zweiten (7b) Teil umfaßt und das Auslesen der in den Zwischenspeichern (7, 10) enthaltenen Daten in zwei aufeinanderfolgenden Zyklen erfolgt, wobei ein erster Zyklus darin besteht, den Inhalt des ersten Teils (7a) des ersten Zwischenspeichers auszulesen, und ein zweiter Zyklus darin besteht, den Inhalt des zweiten Teils (7b) des ersten Zwischenspeichers und gleichzeitig den Inhalt des zweiten Zwischenspeichers (10) auszulesen.

4. Schaltung nach irgendeinem der Ansprüche 1 bis 3, dadurch gekennzeichnet, daß der Wandler (3) als 12-Bit-Wandler ausgebildet ist, wobei die 8 höherwertigen Bits eines Abtastwerts die Adresse der dem genannten Abtastwert zugeordneten Speicherplätze des Vergleichsbereichs (6a) des RAM bilden.

5. Schaltung nach irgendeinem der Ansprüche 1 bis 4, dadurch gekennzeichnet, daß der Vergleichsbereich (6a) des RAM vier, jeder Adresse zugeordnete Speicherplätze umfaßt.

6. Schaltung nach irgendeinem der Ansprüche 1 bis 5, dadurch gekennzeichnet, daß sie Multiplexmittel (2), deren Ausgang an den Eingang des Analog-Digital-Wandlers (3) und deren Eingänge an mehrere Kanäle (1-n) angeschlossen sind, sowie Mittel (13) zur Auswahl des Kanals umfaßt, dessen analoge Signale umgewandelt werden sollen, wobei jedem der genannten Kanäle oder einer bestimmten Gruppe von Kanälen jeweils ein Teil des Vergleichsbereichs (6a) des RAM zugeordnet ist und der Adreßbus (AD1) des RAM an den Ausgang der genannten Mittel (13) zur Kanalauswahl angeschlossen ist, derart daß im RAM der genannte Teil des Vergleichsbereichs (6a) ausgewählt wird, der demjenigen Kanal entspricht, dem der umgewandelte Abtastwert zugeordnet ist.

7. Schaltung nach Anspruch 6, dadurch gekennzeichnet, daß sie 16 Kanäle umfaßt und die Mittel (13) zur Kanalauswahl den Adreßbus (AD1) des RAM mit vier Bits beaufschlagen, die dem, dem umgewandelten Abtastwert zugeordneten Kanals, entsprechen.

8. Schaltung nach irgendeinem der Ansprüche 1 bis 7, dadurch gekennzeichnet, daß der Vergleichsbereich (6a) des RAM eine bestimmte Anzahl (4) von zusätzlichen, jeder Adresse zugeordneten Speicherplätzen umfaßt, in denen die Ergebnisse des Vergleichs zwischen zusätzlichen Schwellwerten und den Schwellwerten, deren höherwertige Bits einen bestimmten Wert aufweisen, zunächst als Binärwerte abgespeichert werden, wobei der Inhalt der genannten zusätzlichen Speicherplätze dem Eingang einer Alarm- und/oder Anzeigeschaltung (11) zugeführt wird.

9. Schaltung nach Anspruch 8, dadurch gekennzeichnet, daß der genannte Vergleichsbereich (6a) des RAM vier, jeder Adresse zugeordnete zusätzliche Speicherplätze umfaßt.

**Claims**

1. A monitoring or protection device comprising a microprocessor (5), a RAM (6), an analog-to-digital converter (3), to whose input analog signals are applied and designed to supply to the microprocessor digital samples representative of the analog input signals, and means for comparing each digital sample with a preset number of preset thresholds, a device characterized in that said comparison means are formed by a first, comparison, zone (6a) of the RAM (6), the RAM comprising an address bus (AD1) connected to the output of the analog-to-digital converter (3), in such a way that a preset number (8) of high bits of a sample constitutes the address of a preset number (4) of memory locations of the comparison zone (6a) in which the results of comparison to said thresholds of the samples whose high bits have a preset value are previously stored, in binary form, said comparison results and the corresponding sample being stored in a second, storage, zone (6b) of the RAM.

2. The device according to claim 1, characterized in that it comprises a first buffer memory (7) whose input is connected to the output of the analog-to-digital converter (3), a second buffer memory (10) whose input is connected to the output of the comparison zone (6a) of the RAM, the outputs of the first and second buffer memories (7, 10) being connected to the microprocessor data bus (AD/D), itself connected to the RAM data bus (D1), so that the data, samples and results of comparison of this sample with said thresholds, contained in said buffer memories, can be read and stored in the storage zone (6b) of the RAM.

3. The device according to claim 2, characterized in that the first buffer memory (7) comprises first (7a) and second (7b) parts, reading of the data contained in the buffer memories (7, 10) being performed in two successive cycles, a first cycle consisting in reading the content of the first part (7a) of the first buffer memory and a second cycle consisting in simultaneously reading the content of the second part (7b) of the first buffer memory and the content of the second buffer memory (10).

4. The device according to any one of the claims 1 to 3, characterized in that the converter (3) is a 12-bit converter, the 8 high bits of a sample constituting the address of the locations of the comparison zone (6a) of the RAM associated to said sample.

5. The device according to any one of the claims 1 to 4, characterized in that the comparison zone (6a) of the RAM comprises four memory locations associated to each address.

6. The device according to any one of the claims 1 to 5, characterized in that it comprises multiplexing means (2) whose output is connected to the input of the analog-to-digital converter (3), and whose inputs are connected to a plurality of channels (1-n), means (13) for selecting the channel whose analog signals have to be converted, a part of the comparison zone (6a) of the RAM being assigned to each of said channels, or to a preset group of channels, the RAM address bus (AD1) being connected to the output of said means (13) for selecting the channel, so as to select in the RAM said part of the comparison zone (6a) corresponding to the channel to which the converted sample is associated.

7. The device according to claim 6, characterized in that it comprises 16 channels, the means (13) for selecting the channels supplying to the RAM address bus (AD1) four bits representative of the channel associated to the converted sample.

8. The device according to any one of the claims 1 to 7, characterized in that the comparison zone (6a) of the RAM comprises a preset number (4) of additional memory locations, associated to each address in which the results of comparison of additional thresholds and samples whose high bits have a preset value are previously stored, in binary form, the content of said additional memory locations being applied to the input of an alarm and/or signalling circuit (11).

9. The device according to claim 8, characterized in that said comparison zone (6a) of the RAM comprises 4 additional memory locations associated to each address.

Figure 1

Figure 2